# EUROPEAN PATENT APPLICATION

(11) **EP 2 269 860 A1**
(43) Date of publication of application: **05.01.2011**
(21) Application number: 09728532.4
(22) Date of filing: 28.01.2009
(51) Int. Cl.: B60N 2/08

(54) **SEAT TRACK**

(30) Priority: 03.04.2008 JP 2008096972; 04.04.2008 JP 2008097827
(71) Applicant: SHIROKI CORPORATION, Fujisawa-shi, Kanagawa 252-0811 (JP)
(72) Inventor: OI, Masataka, Fujisawa-shi Kanagawa 252-0811 (JP); WATANABE, Takahiro, Fujisawa-shi Kanagawa 252-0811 (JP); FUKUYAMA, Kazuyuki, Fujisawa-shi Kanagawa 252-0811 (JP)
(74) Representative: Schaumburg, Thoenes, Thurn, Landskron, Eckert
(86) International application number: PCT/JP2009/051365
(87) International publication number: WO 2009/122767

(57) **Abstract**

A lock lever bracket fixed to an upper rail and serving as a lock mechanism for locking the upper rail sliding relative to a lower rail includes shaft support holes which are separated from each other in the slide direction of the upper rail and through which an open rod is inserted. A lock lever includes two bearing portions which are disposed close to both shaft support holes of the lock lever bracket and a rotation transmission groove. The open rod includes a linear shaft portion which extends through each shaft support hole and each bearing portion and a bent portion which engages with the rotation transmission groove of the lock lever and rotates along with the linear shaft portion so as to rotate the lock lever in the unlock direction. The bearing portion of the lock lever is formed as a clip-shaped bearing portion in which a pair of plate-shaped portions is provided separated from each other in the insertion direction of the open rod, bearings are formed by bending the pair of plate-shaped portions in the opposite directions so as to interpose the open rod therebetween, and a gap between the bearings in the radial direction is smaller than a diameter of the open rod.

## Description

### TECHNICAL FIELD

The present invention relates to a seat track that is used to adj ust a position of a seat in the forward/rearward direction, and particularly, to a seat track having a characteristic slide lock mechanism and lock release mechanism.

### BACKGROUND ART

Conventionally, a seat track used to move a seat in the forward/rearward direction is equipped with a lock mechanism which prohibits movement of the seat track and a lock release mechanism which performs a lock release operation. A typical seat track is constructed as follows. Upper rails on the seat are slidably supported on lower rails fixed to a floor. Each of the lower and upper rails is installed on the outer and inner sides of the seat track at a predetermined interval therebetween. Each upper rail is provided with a lock lever which is able to engage with and disengage from a lock hole of the lower rail, and the lock lever is biased by a lock biasing spring in a direction in which the lock lever engages with the lock hole. A lock release mechanism includes an operational loop-shaped handle (a handle member) and an open rod that transmits a lock release force of the loop-shaped handle to the lock lever. The lock lever is disposed in upright wall portions of both ends of the lock lever bracket, and the open rod is provided so as to extend through shaft holes formed in the upright wall portions and an open rod penetration groove formed in the lock lever. When the loop-shaped handle is operated in order to adjust the position of the seat in the forward/rearward direction, the open rod rotates in the lock release direction, and thus the lock lever disengages from the lock hole, while resisting against the biasing force of the lock biasing spring, thereby permitting the movement of the upper rail.

Further, in the seat track installed for the seat that is movable in the forward/rearward direction, generally a slide lock mechanism that prohibits the movement of the upper rails and a lock release mechanism that releases the locked state induced by the slide lock mechanism are provided on the outer and inner sides of the seat track.

The seat track includes a substantially U-shaped open lever which includes a portion along the outer side of the seat track, a portion along the front edge of the seat, a portion along along the inner seat track. One end of the open lever is connected to the outer lock release mechanism and the other end is connected to the inner lock release mechanism, so that when the portion along the front edge of the seat is lifted up, the locked state of the outer and inner slide lock mechanisms are released by the outer and inner lock release mechanisms (refer to Patent Document 1).

Subsequently, when the portion of the open lever that is formed along the front edge of the seat is lifted up, the locked state of each slide lock mechanism is released by each corresponding lock release mechanism.
[Patent Document 1] Japanese Patent Application Laid-Open (JP-A) No. 2005-225415

### SUMMARY OF INVENTION

### TECHNICAL PROBLEM

In a conventional lock release mechanism of the seat track, the open rod and the lock lever are joined to each other by welding. However, when the open rod and the lock lever are welded to each other, the lock lever is distorted due to welding heat, which easily causes fitting errors. In addition, since it takes time for the welding, the productivity is poor. Furthermore, sinceweldpenetration, sputter, or the like, is generated by the welding, so that the quality control thereof is very difficult.

In connection with the seat track disclosed in Patent Document 1, a belt anchor may be attached to the rear portion of the inner seat track. In this configuration, if a front collision occurs in the vehicle, a force of moving forward a passenger sitting on the seat acts on the inner seat track via the belt anchor, and the rear portion of the inner seat track may lift up about its front portion serving as a pivot point.

When the rear portion of the inner seat track is lifted up, the open lever rotates in a direction in which the portion along the front edge of the seat moves downward (this phenomenon is called "jack up"). Subsequently, when the portion along the front edge of the seat (the end portion of rotation of the open lever) comes into contact with the floor, the rotation of the open lever is prohibited. When the rear portion of the inner seat track is further lifted up, since the further rotation of the open lever is prohibited, the open lever is rotated relative to the inner lock release mechanism in a direction so that the portion of the open lever that is formed along the front edge of the seat is lifted up, which releases the locked state of the inner seat slide lock mechanism.

In order to prevent the locked state of the seat slide lock mechanism from being released, a predetermined gap needs to be ensured between the seat track and the floor so that the portion of the open lever that is formed along the front edge of the seat does not come into contact with the floor.

For this reason, a problem arises in that a seat surface cannot be located at a low position. Note that if a distance (hereinafter, a radius of rotation of the open lever) between the rotational center of the open lever and the portion along the front edge of the seat (i.e. the end portion of rotation of the open lever) is set to be short, the gap can be narrowed, but another problem arises in that the operation force for releasing the locked state increases.

In the seat track described above, when the lock release mechanism is operated to release the engagement between the lock lever and the lock hole, the upper rail may freely move. For this reason, a stopper member is provided to restrict the movement of the upper rail within the engagement range in which the engagement between the lock lever and the lock hole is enabled. The stopper member is constructed in a manner such that a stopper piece having a pinchbottle shape that is fixed to either one of the upper rail and the lower rail by a rivet or a pin comes into contact with a stopper pin implanted in the other.

However, in the existing stopper structure, since the pinchbottle-shaped stopper piece is fixed using a pin or a rivet, the number of components and the weight of the seat track increases, so that the use of the pinchbottle-shaped stopper piece and the stopper pin also increases the cost.

An object of the invention is to provide a seat track equipped with a lock mechanism and a lock release mechanism which are simple and have an affordable structure, allow ease of joining of an open lever with a lock lever, and enable easy quality control.

Furthermore, another object of the invention is to provide a seat track capable of enabling a lock releasing operation with little force and allowing the seat surface to be lowered.

Furthermore, another object of the invention is to provide a seat track that is equipped with a slide stopper which is simple and has an affordable structure, is lightweight, and has a sufficient strength.

### SOLUTION TO PROBLEM

In order to solve the above-mentioned problems, the invention provides a seat track including a lower rail; an upper rail which movably engages with the lower rail; a slide lock mechanism which prohibits a movement of the upper rail relative to the lower rail and includes a lock lever that is movable between a locked position at which the movement of the upper rail relative to the lower rail is restricted and an unlocked position at which the restriction of the movement of the upper rail relative to the lower rail is released; and a lock release mechanism which unlocks the lock lever, wherein the lock release mechanism includes an open rod which transmits a rotational force of an unlock direction to the lock lever and a lock lever bracket which rotatably supports the open rod and the lock lever and is fixed to the upper rail, wherein the lock lever bracket includes shaft support holes which are distanced from each other in a slide direction of the upper rail and through which the open rod is inserted, wherein the lock lever includes two bearing portions which are disposed close to both shaft support holes of the lock lever bracket and a rotation transmission groove which extends in the slide direction of the upper rail, wherein the open rod includes a linear shaft portion which extends through each shaft support hole and each bearing portion and a bent portion which engages with the rotation transmission groove of the lock lever and rotates along with the linear shaft portion so as to rotate the lock lever in the unlock direction, and wherein at least one of the bearing portions of the lock lever is formed as a clip-shaped bearing portion in which a pair of plate-shaped portions is provided so as to be separated from each other in an insertion direction of the open rod, bearings are formed by bending the pair of plate-shaped portions in opposite directions so as to hold the open rod therebetween, and a gap between the bearings in a radial direction is smaller than a diameter of the open rod.
With this configuration, distortion or bonding error does not occur in the lock lever since the open rod and the lock lever are not welded to each other. Also, the productivity is high since time for welding is not needed, and the quality assurance is facilitated since weld penetration or sputter is not generated.

If the clip-shaped bearing portion is formed in the vicinityof the front upright wall of the lock lever bracket, clattering generated between the lock lever and the open rod can be further decreased.

If the linear shaft portion of the open rod is inserted through the clip-shaped bearing portion while elastically deforming the pair of plate-shaped portions so as to enlarge the diameter between the bearing portions, and the linear shaft portion is pressed from both sides due to the elastic restoration force of the plate-shaped portions, the open rod can be easily joined to the lock lever.

The lock release mechanism of the seat track of the invention includes an open lever which extends from a seat front edge portion along the upper rail and comes into contact with a lower portion of a bent portion that is provided on a front end portion of the open rod so as to transmit a rotation operation force in the unlock direction; an open lever bracket, which is fixed to the upper rail, including front and rear elongated holes that are elongated in a vertical direction, and supporting the open lever so as to be rotatable about a contact portion serving as a pivot point (a fulcrum) and comes into contact with the rear elongated hole while the open lever is inserted through the elongated holes; and a handle biasing member which includes a portion extending so as to cross the rear elongated hole and to engage with the upper portion of the open lever and bias the open lever so as to come into contact with the bottom portion of the rear elongated hole, and wherein the handle biasing member preferably includes a bent portion which restricts an upper space of the rear elongated hole and ensures a lower space for allowing the open lever to be inserted therethrough. Since the upper space of the rear elongated hole is restricted by the bent portion, the front end portion of the open lever is not inserted through the upper space, but is guided and inserted into the lower space of the bent portion.

The invention pertaining to claim 5 relates to the seat track, wherein a pair of the seat tracks is provided on the inner and outer sides of a seat, and wherein the lock release mechanism includes: a substantially U-shaped open lever which includes a lever portion along the inner lower and upper rails, a portion along a front edge of the seat, and a lever portion along the outer lower and upper rails and in which the end portion of the inner lever portion is connected to the inner slide lock mechanism, the end portion of the outer lever portion is connected to the outer slide lock mechanism, and the locked state of each slide lock mechanism is released when the portion along the front edge of the seat is lifted up; a first support portion which is provided in each upper rail, can come into contact with the lower portion of the lever portion and serves as a rotational center when the portion along the front edge of the seat moves downward; a second support portion which is provided in each upper rail so as to be located rearwardly from the first support portion, can come into contact with the lower portion of the lever portion and serves as a rotational center when the portion along the front edge of the seat lifts upward; and a biasing unit for biasing the lever portion in a direction so that the lower portion of the lever portion comes into contact with the first support portion and the second support portion.

When the operation force of lifting up the portion along the front edge of the seat acts, both open levers are rotated about the second support portion serving as a rotational center, and the portion along the front edge of the seat is lifted up, releasing the locked state of both slide lock mechanisms.

The invention pertaining to claim 6 relates to the seat track, wherein the open rod is provided along each upper rail, and a seat track includes a crank portion which is provided at the front thereof so as to be able to come into contact with the upper portion of the lever portion in the vicinity of the first support portion and a rear end thereof is connected to the lock lever of the slide lock mechanism. The open rod moves the lock lever between the locked position and the unlocked position when rotating about the axis of a middle portion thereof.

The invention pertaining to claim 7 relates to the seat track, wherein the biasing unit includes: a lock biasing spring which biases the lock lever of the slide lock mechanism in the lock direction and biases the lever portion in a direction in which the lower portion of the lever portion comes into contact with the first support portion via the crank portion of the open rod; and a handle biasing spring of which a middle portion is wound around the open rod, one end portion is lock-engaged with the upper rail and the other end portion is lock-engaged with an upper groove of the lever portion in the vicinity of the second support portion, the handle biasing spring biasing the lever portion in a direction in which the lower portion of the lever portion comes into contact with the second support portion.

The invention pertaining to claim 8 relates to the seat track, wherein the first support portion and the second support portion are formed in the open lever bracket, and the open lever bracket is fixed to the upper rail by burr caulking.

The invention pertaining to claim 9 includes stopper members which are respectively fixed to the lower rail and the upper rail and restrict a movement range of the upper rail, wherein each stopper member includes a stopper body portion which extends in the movement direction of the upper rail and a protrusion portion which protrudes from one longitudinal edge of the stopper body portion, wherein each of the lower rail and the upper rail includes an elongated groove that is elongated in the movement direction of the upper rail, wherein the protrusion portion of each stopper member is fitted and caulked into the elongated groove, and wherein the stopper members fixed to the lower rail and the upper rail restrict the movement of the upper rail in such a manner that end surfaces of the stopper body portions come into contact with each other at the movement range extremity of the lower rail.

In the invention pertaining to claim 10, the stopper members fixed to the lower rail and the upper rail are formed in a shape in which a contour of an end surface of one stopper body portion intersects a contour of an end surface of the other stopper body portion when viewed in the movement direction. With this configuration, even if manufacturing error or wobbling occurs during the operation, since the end surfaces of the stopper body portions reliably come into contact with each other, the movement of the upper rail can be restricted.

In the invention pertaining to claim 11, the stopper member that is fixed to one of the lower rail and the upper rail is formed so that the stopper body portion is formed in a flat plate shape, and the stopper member that is fixed to the other thereof is bent so that the end surface of the stopper body portion is formed in a hook shape.

In the invention pertaining to claim 12, a plurality of the protrusion portions is formed in the movement direction of the upper rail so as to be separated from each other. With this configuration, the fixation strength between the stopper member and the rail can be enhanced.

The invention pertaining to claim 13 relates to the seat track, wherein one stopper member is fixed to the substantially center position of the lower rail in the forward/rearward direction, and two stopper members are fixed to the upper rail with the stopper member of the lower rail interposed therebetween. With this configuration, since the stopper member of the lower rail is covered with the upper rail at all times, the seat track has a good external appearance and is safe.

### EFFECTS OF THE INVENTION

According to the invention pertaining to claims 1 through 4, it is possible to realize the lock release mechanism of the seat track which is simple and affordable price in the structure, allows easy bonding between the open rod and the lock lever, and enables easy quality control.

According to the invention pertaining to claim 5, when a normal lock release operation is performed, i.e., an operation force of lifting up the portion along the front edge of the seat acts on the lever portion, the lever portion that is provided along the front edge of the seat is lifted up about the second support portion serving as a rotational center, and the locked state of the first and second slide lock mechanisms are released. Subsequently, if a front collision occurs in the vehicle, the force of moving forward the passenger sitting on the seat acts on the inner seat track via the belt anchor, and the rear portion of the inner seat track is lifted up about its front portion serving as a pivot point. When the rear portion of the inner seat track is lifted up, the lever portion is rotated in a direction in which the portion along the front edge of the seat moves downward about the first portion serving as a pivot point that is located ahead of the second support portion. Namely, the lever portion is rotated about the second support portion serving as a rotational center when the portion along the front edge of the seat is lifted up, and is rotated about the first support portion serving as a rotational center that is located ahead of the second support portion when the portion along the front edge of the seat moves downward. Accordingly, since the first support portion is located on the front side of the seat, when the lever portion is rotated in a direction so that the portion along the front edge of the seat moves downward, the distance between the rotational center of the lever portion and the portion along the front edge of the seat (the end portion of rotation of the lever portion) can be shortened, and a gap required between the seat track and the floor can be narrowed, which allows the seat surface to be located at a lower position. In addition, since the second support portion is located on the rear side of the seat, when the lever portion is rotated in a direction in which the portion formed along the front edge of the seat is lifted up, the distance between the rotational center of the lever portion and the portion formed along the front edge of the seat can be lengthened, which prevents the lock release force from increasing.

According to the invention pertaining to claims 6 through 8, when a normal lock release operation is performed, i.e., when an operation force of lifting up the portion along the front edge of the seat acts on the lever portion, the lever portion near the portion formed along the front edge of the seat is lifted up about the second support portion serving as a rotational center, and the locked state of the first and second slide lock mechanisms are released via the first lock release mechanism and the second lock release mechanism. If a front collision occurs in the vehicle, generally the force of moving forward the passenger sitting on the seat acts on the inner seat track via the belt anchor, and the rear portion of the inner seat track is lifted up about its front portion serving as a pivot point. When the rear portion of the inner seat track is lifted up, the lever portion is rotated in a direction so that the portion along the front edge of the seat moves downward about the first portion serving as a pivot point that is located ahead of the second support portion. Namely, the lever portion is rotated about the second support portion serving as a rotational center when the portion along the front edge of the seat is lifted up, and is rotated about the first support portion serving as a rotational center that is located ahead of the second support portion when the portion along the front edge of the seat moves downward.
Accordingly, since the first support portion is located on the front side of the seat, when the lever portion is rotated in a direction in which the portion along the front edge of the seat moves downward, the distance between the rotational center of the lever portion and the portion along the front edge of the seat (the rotation end portion of the lever portion) can be shortened, and a gap that needs to be provided between the seat track and the floor can be narrowed, so that the seat surface can be located at a lower position. In addition, since the second support portion is located on the rear side of the seat, when the lever portion is rotated in a direction in which the portion along the front edge of the seat is lifted up, the distance between the rotational center of the lever portion and the portion along the front edge of the seat can be lengthened, so that the lock release force is not increased.

According to the invention pertaining to claim 7, the biasing unit includes: a lock biasing spring which biases the lock lever of the slide lock mechanism in the lock direction and biases the lever portion in a direction in which the lower portion of the lever portion comes into contact with the first support portion via the crank portion of the open rod; and a handle biasing spring of which a middle portion is wound around the open rod, one end portion is lock-engaged with the upper rail, and the other end portion is lock-engaged with an upper groove of the lever portion in the vicinity of the second support portion, and which biases the lever portion in a direction in which the lower portion of the lever portion comes into contact with the second support portion. Accordingly, the attachment of the handle biasing spring is simple.

According to the invention pertaining to claim 8, the first support portion and the second support portion are formed in the open lever bracket, and the open lever bracket is fixed to the upper rail by burr caulking. Accordingly, a fastening component such as a rivet is not additionally needed.

According to the invention pertaining to claims 9 through 13, the seat track includes a slide stopper that is simple and has an affordable structure, is lightweight, and is easy to manufacture.

### BRIEF DESCRIPTION OF THE DRAWINGS

FIG. 1 is a perspective view illustrating an embodiment of a seat track that employs a lock release mechanism of the invention.
FIG. 2 is a plan view illustrating a state where a loop-shaped handle of the seat track of FIG. 1 is removed.
FIG. 3 is a side view illustrating a state where the loop-shaped handle of the seat track of FIG. 1 is removed.
FIG. 4 is a cross-sectional view taken along the sectional line A-A of FIG. 1.
FIG. 5 is a cross-sectional view illustrating a locked state when taken along the sectional line B-B of FIG. 1.
FIG. 6 is a cross-sectional view illustrating an unlocked state when taken along the sectional line B-B of FIG. 1.
FIG. 7A is a cross-sectional view showing fundamental components, illustrating one bearing portion of a lock lever, taken along the sectional line C-C of FIG. 3; and FIG. 7B is a cross-sectional view showing fundamental components, illustrating the other bearing portion of the lock lever, taken along the sectional line D-D of FIG. 3.
FIG. 8 is a cross-sectional view showing fundamental components, illustrating a relationship between an elongated hole on the rear side of an open lever bracket and a handle biasing spring when taken along the sectional line E-E of FIG. 3.
FIG. 9 is a cross-sectional view illustrating a jack-up state, taken along the sectional line B-B of FIG. 1.
FIG. 10 is a figure illustrating another embodiment. FIG. 11 is a figure viewed in the direction C of FIG. 10.
FIG. 12 is a plan view illustrating a state where a seat track stopper is attached to the seat track of FIG. 1 with the loop-shaped handle removed.
FIG. 13 is a side view illustrating a state where the seat track stopper is attached to the seat track of FIG. 1 with the loop-shaped handle removed.
FIG. 14 is a perspective view illustrating an embodiment of one seat track stopper of a pair of seat track stoppers of the seat track of FIG. 1.
FIG. 15A is a perspective view illustrating an embodiment of the other seat track stopper of the pair of seat track stoppers of the seat track of FIG. 1, and FIG. 15B is a front view thereof.
FIG. 16A is a cross-sectional view taken along the sectional line C-C of FIG. 13, and FIG. 16B is a cross-sectional view taken along the sectional line D-D of FIG. 13.
FIG. 17 is a perspective view illustrating a weld bolt used in the seat track of FIG. 1.
FIG. 18 is a plan view illustrating a state where the weld bolt of FIG. 17 is fixed to an upper rail.
FIG. 19 is a cross-sectional view illustrating a relationship between the weld bolt and the upper rail, taken along the sectional line E-E across the upper rail of FIG. 13.
FIG. 20A is a plan view illustrating a state where a leg bracket is attached to the seat track of FIG. 1, and FIG. 20B is a side view thereof.
FIG. 21 is a cross-sectional view taken along the sectional line F-F of FIG. 20B.

### DESCRIPTION OF REFERENCE NUMERALS

- 15:: Upper rail
- 16:: Lower rail
- 19:: Lock lever bracket
- 19c:: Shaft support hole
- 20:: Open rod
- 20a:: Front end bent portion
- 20b:: Linear shaft portion
- 20c:: Rear end bent portion
- 21:: Lock lever
- 21a:: Lock claw
- 21b1, 21b2:: Bearing portion
- 21c:: Rotation transmission groove
- 21d, 21e:: Bearing plate
- 21d1, 21e1:: Front end portion
- 21f:: Shaft hole
- 21i:: Shaft hole
- 22:: Lock biasing spring
- 30:: Open lever bracket
- 30a:: Fixed portion
- 30b:: Shaft support hole
- 30c,: 30d: Side suspension portion
- 30e,: 30f: Elongated hole
- 31:: Open lever
- 31a:: Groove
- 32:: Handle biasing spring
- 32a:: Coil portion
- 32b:: One end portion
- 32c:: Engagement portion
- 32d:: Linear portion
- 32e:: The other end portion
- 33:: Loop handle

### DESCRIPTION OF EMBODIMENTS

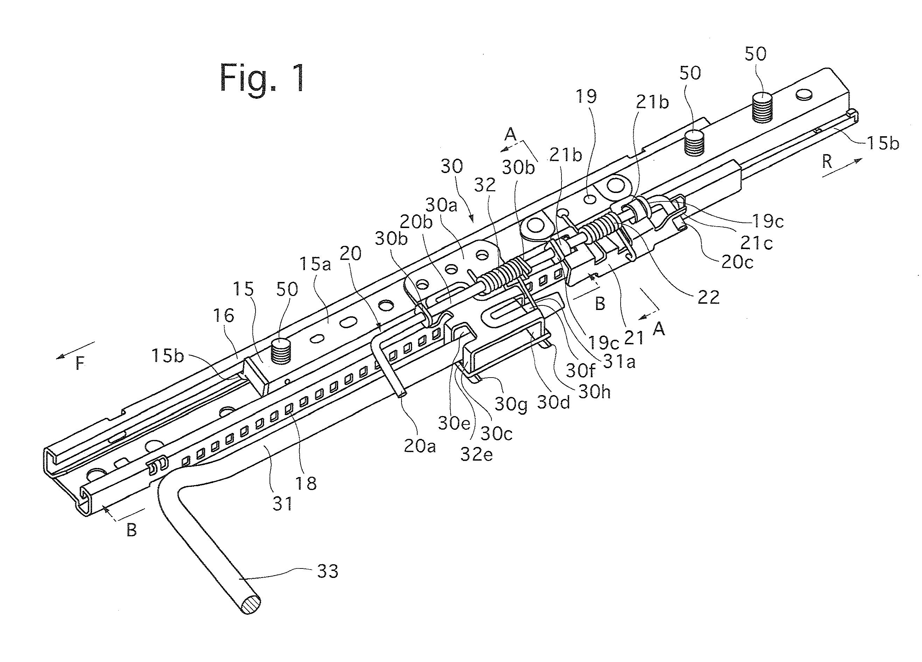

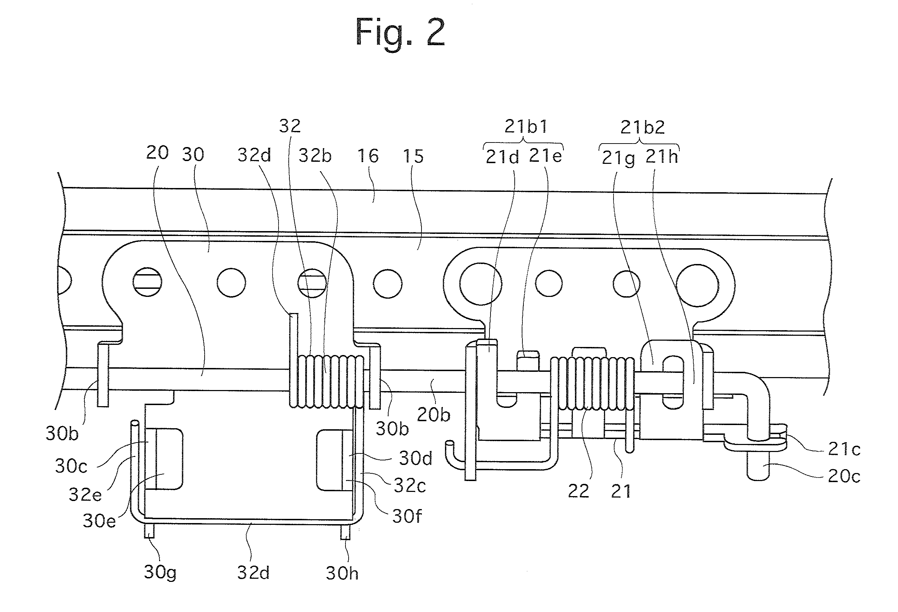

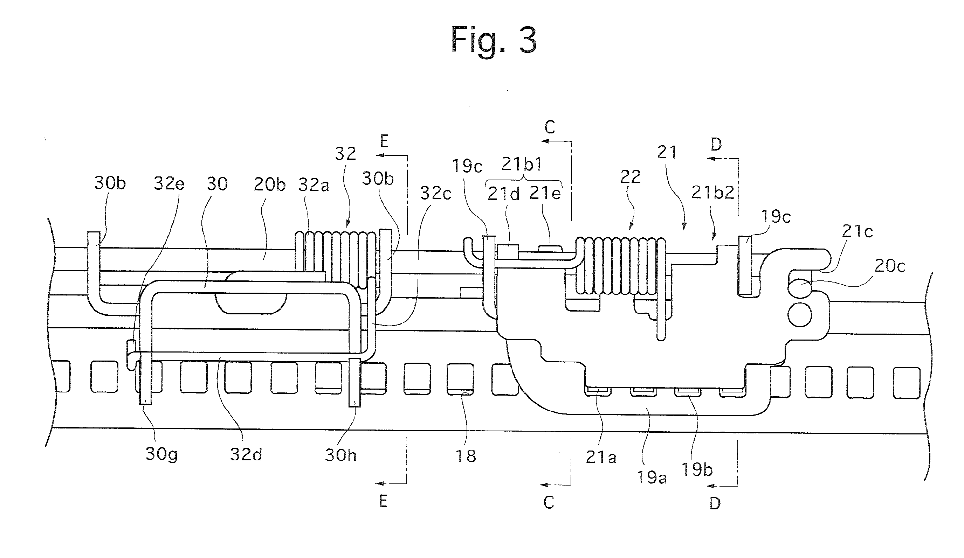

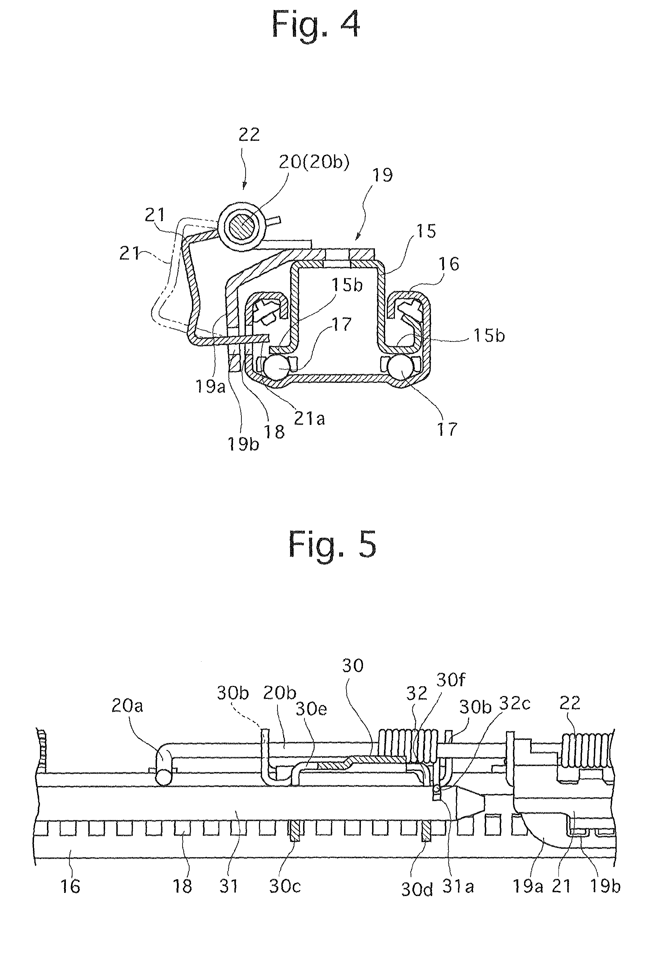

An exemplary embodiment of the invention will be described with reference to the accompanying drawings. A seat track that is illustrated in the perspective view of FIG. 1, the plan view of FIG. 2, and the side view of FIG. 3 includes an upper rail 15 attached to a lower portion of a seat cushion (not shown), and a lower rail 16 fixed to a floor of a vehicle. The lower rail 16 is formed to have a U-shaped section with an opening portion at the center of the upper surface, and a plurality of lock holes 18 are formed in one side surface thereof. The upper rail 15 includes a center protrusion portion 15a which protrudes upward from the opening portion of the upper surface of the lower rail 16 and has a substantially reversed U-shaped section, and support arm portions 15b which protrude into both sides of the lower rail 16. The upper rail 15 is supported on the lower rail 16 in a movable (slidable) manner in the forward/rearward direction (the length direction of the rail) of the vehicle via a plurality of guide balls 17 (FIG. 4) disposed between the support arm portion 15b and the lower rail 16, and the position of the seat in the forward/rearward direction is adjustable depending on the movement of the upper rail 15. Furthermore, although only one pair of the upper rail 15 and the lower rail 16 is shown in the drawings, two pairs of rails, each having the upper rail 15 and the lower rail 16, are provided in the seat track at different positions (i.e. left-hand and right-hand positions) of the seat. Namely, two sets of rails, each having the upper rail 15 and the lower rail 16, are provided on the inner and the outer side of the seat track, respectively so as to have a predetermined gap therebetween. Hereinafter, the configuration of the upper and lower rails 15 and 16 on the outer side, and mechanisms and members provided therein will be described.

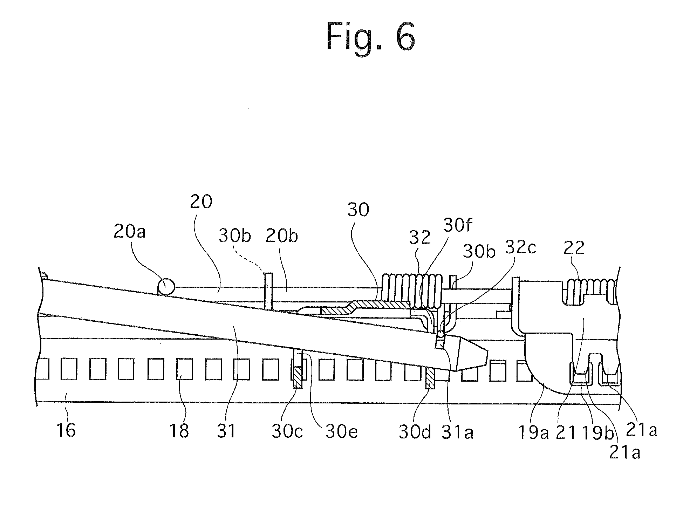

A lock lever 21 is axially supported on the upper rail 15 via a lock lever bracket 19 and an open rod 20 so as to be rotatable. As illustrated in FIG. 4, the lock lever bracket 19 is fixed to the center protrusion portion 15a so as to face a side wall of the lower rail 16 while having a gap therebetween, and includes a facing portion 19a provided with a hole 19b facing the lock hole 18. The lock lever 21 includes a plurality of plural lock claws 21a (FIG. 6), and is rotatable between a locked position (a position depicted by the solid line of FIG. 4) where the lock claw 21a engages with the lock hole 18 of the lower rail 16 via the hole 19b and an unlocked position (a position depicted by the two-dot chain line of FIG. 4) where the lock claw 21a disengages from the lock hole 18.

The lock lever 21 is rotatably supported on the open rod 20, and has the support structure that will be detailed below. The open rod 20 includes a front end bent portion (crank portion) 20a and a rear end bent portion 20c which are respectively provided in both ends of a linear shaft portion 20b. A pair of shaft support holes 19c are provided in upright walls of the lock lever bracket 19, the shaft support holes 19c being disposed at separate positions in the forward/rearward direction thereof. The linear shaft portion 20b of the open rod 20 is inserted through (extends through) each of the shaft support holes 19c so as to be rotatable relative thereto. Also, the linear shaft portion 20b is inserted through (extends through) a pair of bearing portions 21b1 and 21b2 of the lock lever 21 so as to be rotatable relative thereto, and axially supports the lock lever 21 so as to be rotatable.

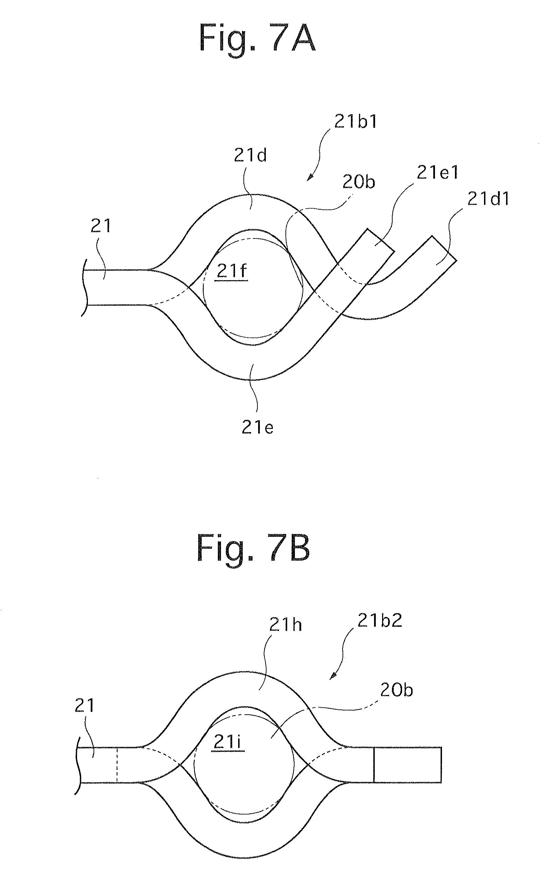

The bearing portions 21b1 and 21b2 of the lock lever 21 are formed with a predetermined gap therebetween. One bearing portion 21b1 is formed by a pair of bearing plates 21d and 21e that is arranged in the seat slide direction. The pair of bearing plates 21d and 21e is constructed in a manner such that their concave portions recessed in vertically opposite directions face each other, i.e., so as to interpose the thickness, and a shaft hole 21f is formed between the concave portions of the pair of bearing plates 21d and 21e. The clip-shaped bearing portion 21b1 sandwiches and axially supports the linear shaft portion 20b via the shaft hole 21f between the pair of bearing plates 21d and 21e (FIG. 7A). The bearing plates 21d and 21e are formed so that the diameter of the shaft hole 21f is smaller than that of the linear shaft portion 20b in the state before the lock lever 21 is inserted. The linear shaft portion 20b is inserted into the shaft hole 21f, resisting against the elastic forces of the bearing plates 21d and 21e while enlarging the diameter of the shaft hole, and after the insertion, the linear shaft portion is supported by the bearing plates 21d and 21e without clattering because the diameter is reduced due to the elastic force. In addition, front end portions 21d1 and 21e1 of the bearing plates 21d and 21e are bent so as to intersect each other and are separate from each other as viewed from the rear side of the seat slide direction (FIG. 7A). Accordingly, when the front end portions 21d1 and 21e1 are pressurized, the bearing plates 21d and 21e are elastically deformed so as to enlarge the diameter of the shaft hole 21f. Likewise, when the front end portions 21d1 and 21e1 are pressurized to thereby enlarge the diameter of the shaft hole 21f, the linear shaft portion 20b can be inserted through the shaft hole. When the force of pressurizing the front end portions 21d1 and 21e1 is removed, the bearing plates 21d and 21e are restored in a direction of reducing the diameter of the shaft hole 21f to thereby pressurize the linear shaft portion 20b, and hence a reaction between the open rod 20 and the lock lever 21 becomes small.

In the other bearing portion 21b2, a notch is formed at the center of one bearing plate, and bearing plate portions 21g and 21h on both sides of the notch are bent in the opposite directions with respect to the plate thickness, thereby forming a shaft hole 21i at a distance in the seat slide direction. The linear shaft portion 20b is inserted through the shaft hole 21i. In addition, a coil portion of a lock biasing spring 22 is disposed between the bearing portions 21b1 and 21b2, and the linear shaft portion 20b extends through the coil portion.

As described above, the lock lever 21 is rotatably supported by inserting the linear shaft portion 20b of the open rod 20 through the shaft holes 21f and 21i of the bearing portions 21b1 and 21b2. In addition, the other bearing portion 21b2 and the clip-shaped bearing portion 21b1 may have the same structure, but clattering is further reduced when the bearing portion 21b1 is formed in a clip shape. The other bearing portion 21b2 is advantageous in strength when it is configured to have a fixed shaft hole.

Also, in the lock lever 21, a rotation transmission groove 21c is formed at a portion extending backward along the side surface of the lower rail 16. The rear end bent portion 20c of the open rod 20 engages with the rotation transmission groove 21c. The engagement position between the rear end bent portion 20c and the rotation transmission groove 21c is eccentric from the axis of the linear shaft portion 20b. Therefore, when the open rod 20 rotates about the axis of the linear shaft portion 20b, a rotation force is transmitted to a contact point which is eccentric from rotational center between the rear end bent portion 20c and the rotation transmission groove 21c, and the lock lever 21 rotates about the linear shaft portion 20b serving as a rotational center. The lock lever 21 is rotationally biased to the locked position (in the counter-clockwise direction of FIG. 4) by the lock biasing spring 22 including a torsion coil spring provided around the linear shaft portion 20b. One arm portion (the spring end portion) extending from the coil portion of the lock biasing spring 22 engages with the lock lever bracket 19, and the other arm portion (the spring end portion) engages with the side portion of the lock lever 21.

A lock release mechanism that rotates the lock lever 21, which is rotationally biased to the locked position, to the unlocked position includes the open rod 20, the open lever bracket 30, the open lever 31, the handle biasing spring 32, and the loop-shaped handle (the handle member) 33.

The open lever bracket 30 includes a fixed portion 30a which is fixed to the upper surface side of the upper rail 15, a shaft support hole 30b which is formed in the pair of shaft support arm portions rotatably supporting the linear shaft portion 20b of the open rod 20 and through which the linear shaft portion 20b of the open rod 20 is inserted so as to be rotatably supported thereto, and a pair of side suspension portions 30c and 30d which is suspended from the fixed portion 30a so as to form a substantially right angle with respect to the side wall of the lower rail 16. Elongated holes 30e and 30f are respectively formed in the side suspension portions 30c and 30d so as to be elongated in the perpendicular direction, and the open lever 31 is inserted through the elongated holes 30e and 30f. In addition, in the open rod 20, one of the bent portions 20a and 20c is not subj ected to bending processing before assembled, and as described above, the bending processing is performed after the linear shaft portion 20b is inserted through the shaft support holes 30b and 19c and the shaft holes 21f and 21i.

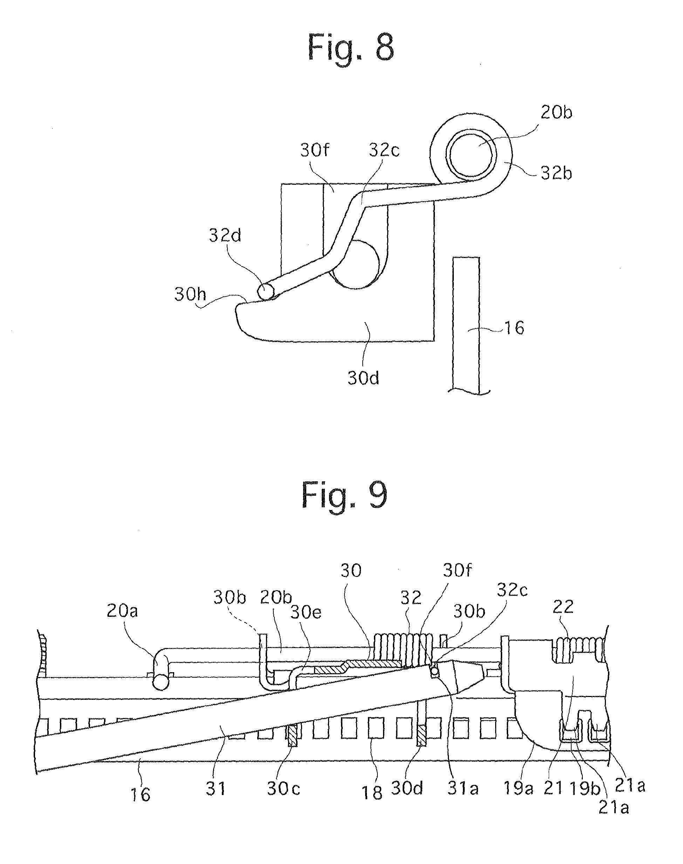

In the open lever 31, a lever portion along the upper and lower rails 15 and 16 disposed on the inner and outer side of the seat is integrally formed with a portion (the loop-shaped handle 33) formed along the front edge of the seat are integrated, thereby forming about a U shape. The open lever 31 is biased by the handle biasing spring 32 in a direction so that the lower portion around the rear end portion comes into contact with the bottom portion of the elongated hole 30f. The handle biasing spring 32 includes a coil portion 32a of which a middle portion is wound around the linear shaft portion 20b of the open rod 20, one end portion 32b which extends from one side of the coil portion 32a and engages with the open lever bracket 30, an engagement portion 32c which extends downward from the other side of the coil portion 32a along the outside of the side suspension portion 30d and crosses the elongated hole 30f, a linear portion 32d which is bent forward and extends up to the side suspension portion 30c, and the other end portion 32e which extends in a direction so as to cross the elongated hole 30e along the outside of the side suspension portion 30c. The handle biasing spring 32 is bent so that the engagement portion 32c crossing the elongated hole 30f restricts the upper space of the elongated hole 30f, and the front end portion of the open lever 31 passes through the lower space of the engagement portion 32c and the elongated hole 30e (FIG. 8).
In addition, the other end portion 32e of the handle biasing spring 32 is formed in the bottom portion of the elongated hole 30e so that the open lever 31 passes through the elongated hole 30e from the upside of the other end portion 32e. In addition, the side suspension portions 30c and 30d are provided with claw portions 30g and 30h which temporarily lock the linear portion 32d of the handle biasing spring 32 so as to position the engagement portion 32c and the other end portion 32e.

The open lever 31 may be assembled in the open lever bracket 30 after the handle biasing spring 32, the lock biasing spring 22, and the lock lever 21 are mounted on the open lever bracket 30 and the lock lever bracket 19 by the use of the open rod 20. The rear end portion of the open lever 31 is inserted through the elongated hole 30e from the upside of the other end portion 32e at a position lower than the front end bent portion 20a of the open rod 20 and is inserted through a gap between the bottom portion of the elongated hole 30f and the engagement portion 32c. Accordingly, the engagement portion 32c engages with the groove 31a formed in the rear end portion of the open lever 31 so as to bias the open lever 31 in a direction so as to bring the open lever 31 into contact with the bottom portion of the elongated hole 30f. Therefore, the lock biasing spring 22 and the handle biasing spring 32 bias the lower portion of the open lever 31 in a direction of bringing the open lever 31 into contact with the bottom portion of the elongated hole 30f of the rear side suspension portion 30d. In addition, since the engagement portion 32c engages with the groove 31a formed in the open lever 31, the handle biasing spring 32 also serves as a retaining portion that suppresses the open lever 31 from escaping from the open lever bracket 30.

As shown in FIGS. 1, 5 and 6, the front end bent portion 20a of the open rod 20 is in contact with the upper portion of the open lever 31. The open rod 20 and the lock lever 21 are configured to integrally rotate together due to the engagement between the rear end bent portion 20c and the rotation transmission groove 21c, where the biasing force of the lock biasing spring 22 that rotationally biases the lock lever 21 toward the locked position acts on the open rod 20, and the biasing force of the lock biasing spring 22 acts in a direction in which the front end bent portion 20a is brought into contact with the open lever 31. However, the lock lever 21 is restricted such that the lock claw 21a extends through the hole 19b to be fitted to the lock hole 18, and the open rod 20 is also rotatably restricted in the direction in which the front end bent portion 20a approaches the open lever 31.

Furthermore, the handle biasing spring 32 rotationally biases the open lever 31 in a direction of opposing the biasing force of the lock biasing spring 22, i.e., a direction in which the open lever 31 is brought into contact with the front end bent portion 20a (in the clockwise direction of FIGS. 5 and 6). However, the rotational biasing force applied from the handle biasing spring 32 to the open lever 31 is set to be smaller than the rotational biasing force applied from the lock biasing spring 22 in the lock direction to the lock lever 21 or the open rod 20. When the front end portion of the loop-shaped handle 33 is lifted up, the open lever 31 is rotated in the clockwise direction about a lower contact portion of the elongated hole 30f that serves as a pivot point (a fulcrum) (refer to FIG. 6), which rotates the front end bent portion 20a of the open rod 20 in the unlock direction. Thereafter, the rear end bent portion 20c of the open rod 20 is rotated in the unlock direction via the linear shaft portion 20b, and the locked state of the rear end bent portion 20c is released since the lock lever 21 fitted to the rotation transmission groove 21c is rotated in the unlock direction so that the lock claw 21a escapes from the lock hole 18. When the front end portion of the loop-shaped handle 33 is let down, the open rod 20 becomes rotatable in the lock direction since the restriction of the front end bent portion 20a in the unlock direction is released. Accordingly, the lock lever 21 is rotated in the lock direction by the biasing force of the lock biasing spring 22, and the lock claw 21a is fitted to the lock hole 18, resulting in entering a slide locked state.

The loop-shaped handle 33 is integrally formed with the left and right open levers 31. Therefore, when the loop-shaped handle 33 is lifted up, the left and right open levers 31 rotate the lock lever 21 in the unlock direction, so that the locked state of the lock mechanism is released.

The seat track with the above-described structure operates as follows. While an unlock operation of the loop-shaped handle 33 is not performed, the lock lever 21 is maintained at the locked position depicted by the solid line in FIG. 4 due to the biasing force of the lock biasing spring 22. In addition, the front end bent portion 20a and the open lever 31 are maintained in the contact state due to the biasing force of the handle biasing spring 32. When the seat needs to slide, the user lifts up the loop-shaped handle 33. Subsequently, the open lever 31 is rotated about a portion serving as a pivot point which is in contact with the bottom portion of the elongated hole 30f. The front end bent portion 20a is pushed up by the rotation of the open lever 31, and the open rod 20 is rotated in the unlock direction, while resisting against the biasing force of the lock biasing spring 22. Subsequently, the lock lever 21 is rotated from the locked position depicted by the solid line of FIG. 4 to the unlocked position depicted by the two-dot chain line in the same drawing, and the lock claw 21a is removed from the engagement position at which the lock claw 21a was engaged with the lock hole 18. Accordingly, the forward/rearward slide operation of the upper rail 15 relative to the lower rail 16 is permitted.

When a desired seat slide position is obtained, the user releases the operation of lifting up the loop-shaped handle 33. Thereafter, the open rod 20 and the lock lever 21 are returned to the locked position by the rotational biasing force of the lock biasing spring 22, and the lock claw 21a engages with the lock hole 18, so that the forward/backward movement of the upper rail 15 is restricted. In other words, the slide operation is locked.

According to the above-described embodiment, since the open rod is bonded to the lock lever without welding, bonding error or distortion of the lock lever, which unavoidably occurs when the open rod is welded to the lock lever, does not occur. Furthermore, the productivity is increased since welding time is unnecessary, and quality control is facilitated since weld penetration, sputter, or the like caused by the welding is not generated.

In the seat track, the lock biasing spring 22 and the handle biasing spring 32 constitute a biasing unit for biasing the open lever 31 in a direction so that the lower portion of the open lever 31 comes into contact with the elongated hole 30e (the first support portion) of the front side suspension portion 30c and the elongated hole 30f (the second support portion) of the rear side suspension portion 30d.

In the present embodiment, the open lever bracket 30 and the upper rail 15 are attached to each other by burr caulking. Furthermore, the burr caulking maybe performed in such a manner that a burring hole with a cylinder therein is formed around the hole of the upper rail 15, a hole is provided in the open lever bracket 30 to allow insertion of the cylinder therethrough, and thereafter the cylinder inserted through the hole of the open lever bracket 30 is caulked. Alternatively, the burr caulking may be performed in such a manner that a burring hole with a cylinder therein is provided around the hole of the open lever bracket 30, a hole is provided in the upper rail 15 so as to allow insertion of the cylinder therethrough, and thereafter the cylinder inserted through the upper rail 15 is caulked. However, the invention is not limited thereto.

Subsequently, the operation of the above-described configuration will be described with reference to FIGS. 1, 4 to 6, and 9. FIG. 5 shows the locked state, FIG. 6 shows the unlocked state, and FIG. 9 shows the jack-up state.

FIG. 5 is in the locked state in which the lock claw 21a of the lock lever 21 engages with the lock hole 18 of the lower rail 16 by the biasing force of the lock biasing spring 22 so as to prohibit the movement of the upper rail 15 relative to the lower rail 16.

Therefore, when the loop-shaped handle 33 is lifted up as shown from FIG. 5 to FIG. 6, the open lever 31 of the loop-shaped handle 33 is lifted up about the bottom portion (the second support portion) serving as a rotational center of the elongated hole 30f of the rear side suspension portion 30d. Accordingly, the open rod 20 is rotated against the biasing force of the lock biasing spring 22, and the lock claw 21a of the lock lever 21 is separated from the lock hole 18 of the lower rail 16, resulting in entering the lock release state in which the restriction of the movement of the upper rail 15 relative to the lower rail 16 is released.

When the operation force of lifting up the loop-shaped handle 33 of the open lever 31 is released, as shown from FIGS. 6 to 5, the lock claw 21a of the lock lever 21 engages with the lock hole 18 of the lower rail 16 by the biasing force of the lock biasing spring 22, resulting in the locked state again in which the movement of the upper rail 15 relative to the lower rail 16 is prohibited.

Although the above-described lock release operation and the lock return operation are directed to the outer-side operation, the same applies to the inner operation.

Inaddition, if a front collision occurs in the vehicle, a force of moving forward a passenger sitting on the seat acts on the inner seat track (the lower rail 16) via a belt anchor, the rear portion of the inner seat track is lifted up about the front portion serving as a pivot point (a fulcrum), and the inner open lever 31 is rotated in a direction in which the loop-shaped handle 33 moves downward. When the rear portion of the inner seat track is lifted up, as shown from FIG. 5 to FIG. 9, the outer seat track enters a jack-up state where the open lever 31 connected via the loop-shaped handle 33 is rotated about the bottom portion (the first support portion) serving as a rotational center of the elongated hole 30e of the front side suspension portion 30c against the biasing force of the handle biasing spring 32 in a direction in which the loop-shaped handle 33 moves downward relative to the seat track. However, since the open lever 31 is separated from the front end bent portion 20a, the open rod 20 is not rotated in the lock release direction, so that the locked state using the lock lever 21 is not released.

When the state in which the rear portion of the inner seat track is lifted up about the front portion as a pivot point (a fulcrum) is canceled, the seat track returns to the state of FIGS. 3 and 5 by the biasing force of the handle biasing spring 32.
According to the above-described configuration, the following effects can be obtained.

(1) The open lever 31 is rotated about the bottom portion (the second support portion) serving as a rotational center of the elongated hole 30f of the rear side suspension portion 30d when the loop-shaped handle 33 is lifted up, and is rotated about the bottom portion (the first support portion) serving as a rotational center of the front side suspension portion 30c of the elongated hole 30e located closer to the front side than the bottom portion (the second support portion) of the elongated hole 30f when the loop-shaped handle 33 moves downward.

Accordingly, since the first support portion is located in the front portion of the seat track, a distance between the rotational center of the open lever 31 and the loop-shaped handle 33 can be shortened when the loop-shaped handle 33 moves downward. Accordingly, since a gap required between the loop-shaped handle 33 and the floor can be narrowed, a seat surface can be located at a lower position. In addition, since the second support potion is located closer to the rear side of the seat track than the first support portion, a distance between the loop-shaped handle 33 and the second support portion, serving as the rotational center of the open lever 31 when lifting up the loop-shaped handle 33, can be lengthened. Accordingly, the operation force of releasing the locked state does not increase. (2) Since the handle biasing spring 32 serving as a biasing unit only has a structure in which the middle portion is wound around the open rod 20, one end portion is lock-engaged with the open lever bracket (the upper rail 15) 30, and the other end portion is lock-engaged with the groove 31a of the open lever 31, the assembly thereof is simple. In addition, since the other end portion of the handle biasing spring 32 is lock-engaged with the groove 31a of the open lever 31, the open lever 31 can be retained in the open lever bracket 30.
(3) Since the open lever bracket 30 is fixed to the upper rail 15 by burr caulking, a fastening component such as a rivet is not separately needed.
The advantages of (1), (2), and (3) are obtained from both the outer and inner sides of the seat track.

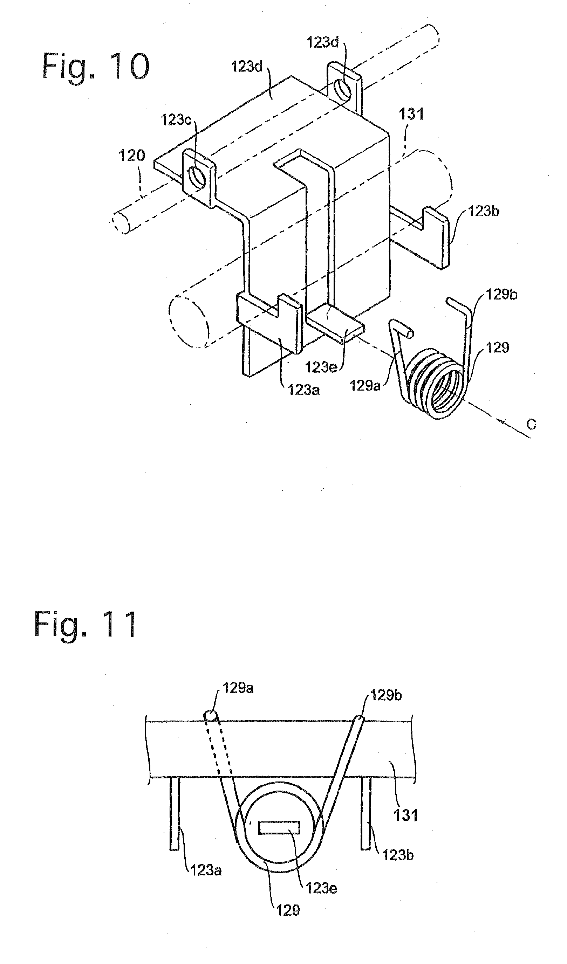

Furthermore, the embodiment is not limited to the above-described embodiment. As shown in FIGS. 10 and 11, the handle biasing spring may be configured as a handle biasing spring 129. Furthermore, a support portion 123e, formed on an open lever bracket 123 provided with first and second support portions 123a and 123b that support an open lever 131 and holes 123c and 123d that support the open rod 120, is inserted through a coil portion and supports the handle biasing spring 129. One end portion 129a of the handle biasing spring 129 is lock-engaged with an upper portion of the open lever 131 and biases the open lever 131 in a direction in which the lower portion of the open lever 131 comes into contact with the first support portion 123a. The other end portion 129b of the handle biasing spring 129 is lock-engaged with another upper portion of the open lever 131 and biases the open lever 131 in a direction in which the lower portion of the open lever 131 comes into contact with the second support portion 123b.
The effects (1), (2), and (3) related to the open lever bracket 30, the open lever 31, and the loop-shaped handle 33 can be obtained even when they are applied to the seat track equipped with the existing lock mechanism or the existing lock lever.

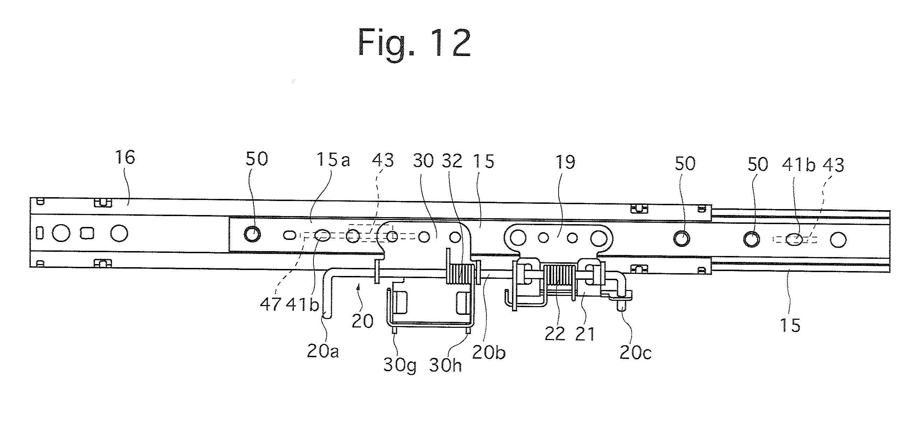

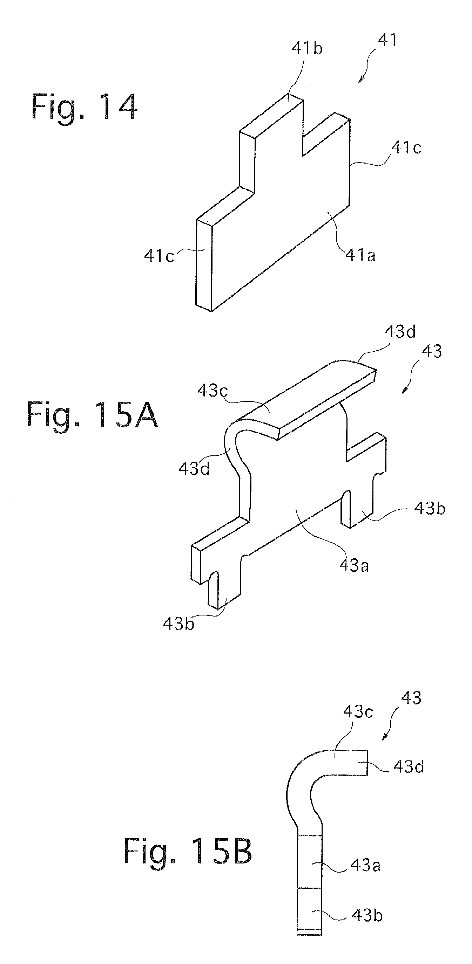

Furthermore, the seat track is provided with a stopper that restricts the movement range of the upper rail 15 relative to the lower rail 16, i.e., the forward/rearward directional slide range. The structure of the stopper will be described with reference to FIGS. 12 to 17. The structure of the stopper of the embodiment includes a first seat track stopper (stopper member) 41 which is mounted on the upper rail 15, and a second seat track stopper (stopper member) 43 which is mounted on the lower rail 16.

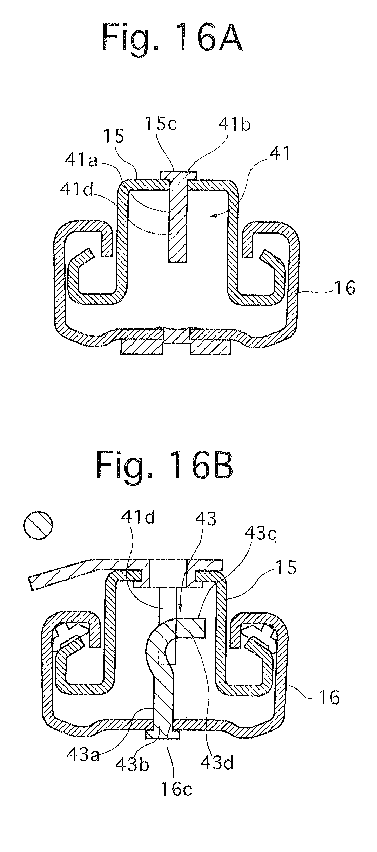

The first seat track stopper 41 includes a plate-shaped stopper body portion 41a and a protrusion portion 41b which protrudes from the center of one edge portion of the stopper body portion 41a in the length direction. In the first seat track stopper 41, the protrusion portion 41b is fitted to an elongated groove 15c extending in the slide direction and formed in the bottom surface of the upper rail 15 while the stopper body portion 41a is disposed in the slide direction of the upper rail 15, and the protrusion portion 41b protruding from the elongated groove 15c is caulked and fixed to the upper rail 15 (FIG. 16A).

The second seat track stopper 43 includes a plate-shaped stopper base portion 43a, a pair of protrusion portions 43b which protrude from the vicinities of both end portions of the stopper base portion 43a in the length direction, and a stopper body portion 43c which protrudes from the opposite side of the protrusion portions 43b. The stopper body portion 43c is bent in a substantially J-shape or a wave shape when viewed from the front side thereof. Namely, the end surface 43d of the stopper body portion 43c includes portions protruding axially leftward and rightward as viewed from the front side thereof. In the second seat track stopper 43, a pair of protrusion portions 43b is engaged with a pair of elongated grooves 16c, formed in the bottom surface of the lower rail 16 to be separated from each other in the slide direction and to be parallel to the slide direction of the upper rail 15 with respect to the bottom surface of the lower rail 16, and each of the protrusion portions 43b protruding from the elongated grooves 16c is caulked and fixed to the lower rail 16 (FIG. 16B).

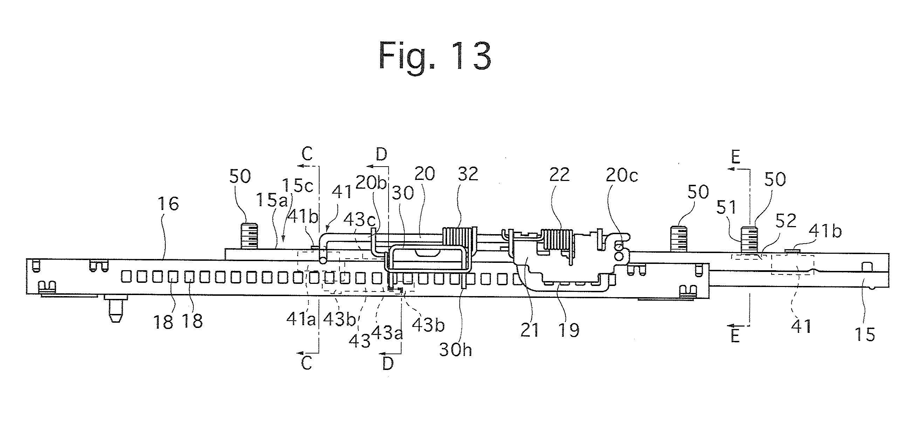

One second seat track stopper 43 is fixed to the lower rail 16, and two first seat track stoppers 41 are fixed to a position of the upper rail 15 with the second seat track stopper 43 interposed therebetween (FIGS. 12 and 13).

In the first seat track stopper 41 and the second seat track stopper 43, when the upper rail 15 slides forward or rearward, end surfaces 41c and 43d of the stopper body portions 41a and 43c collide with each other at the rearward slide limitation position so as to restrict the further slide operation of the upper rail 15. The first seat track stopper 41 and the second seat track stopper 43 are formed so that the end surface 41c of the stopper body portion 41a comes into contact with the end surface 43d of the stopper body portion 43c. However, since the stopper body portion 43c is bent so that the end surface 43d is formed in a hook shape when viewed in the slide direction, even when the position of the first seat track stopper 41 or the second seat track stopper 43 deviates in a direction perpendicular to the slide direction, the end surfaces 41c and 43d exhibit a stopper action by reliably abutting against each other.
The shapes of the end surfaces 41c and 43d when viewed in the slide direction of the upper rail 15 are not limited to the embodiments shown in the drawings, but the shapes are not limited as long as the contours of the end surfaces 41c and 43d intersect each other when viewed in the slide direction.

One protrusion portion 41b is formed in the first seat track stopper 41, but two protrusion portions may be formed as in the second seat track stopper 43. The first seat track stopper 41 may be mounted on the lower rail 16, and the second seat track stopper 43 may be mounted on the upper rail 15. In addition, the second seat track stopper 43 may be used as the first seat track stopper 41.

The seat track with the above-described structure is operated as below. When the loop-shaped handle 33 is not operated to perform an unlock operation, the lock lever 21 is maintained in the locked position depicted by the solid line of FIG. 4 by the biasing force of the lock biasing spring 22. In addition, the front end bent portion 20a and the open lever 31 are maintained contact with each other by the biasing force of the handle biasing spring 32. In order to slide the seat, the user lifts up the loop-shaped handle 33. Thereafter, the open lever 31 is rotated about a portion serving as a pivot point (a fulcrum) coming into contact with the bottom portion of the elongated hole 30f. The front end bent portion 20a is pushed up by the rotation of the open lever 31, and the open rod 20 is rotated in the unlock direction against the biasing force of the lock biasing spring 22. Subsequently, the lock lever 21 is rotated from the locked position depicted by the solid line of FIG. 4 to the unlocked position depicted by the two-dot chain line of the same drawing, and the lock claw 21a is separated from the engagement position with respect to the lock hole 18. Accordingly, the forward/rearward slide operation of the upper rail 15 relative to the lower rail 16 is permitted.

When a desired seat slide position is obtained, the user releases the lifting operation of the loop-shaped handle 33. Subsequently, the open rod 20 and the lock lever 21 are returned to the locked position by the rotational biasing force of the lock biasing spring 22, and the lock claw 21a engages with the lock hole 18, thereby regulating the forward/backward movement of the upper rail 15. In other words, the slide operation is locked.

Hence, when the user slides the upper rail 15 forward or rearward, the end surfaces 41c and 43d of the seat track stoppers 41 and 43 come into contact with each other at the slide limitation position, thereby restricting the further forward or rearward slide operation. Likewise, when the lifting operation of the loop-shaped handle is released at the position where a further sliding operation is restricted by the seat track stoppers 41 and 43 coming into contact with each other, the open rod 20 and the lock lever 21 are returned to the locked position by the rotational biasing force of the lock biasing spring 22, and the lock claw 21a engages with the lock hole 18 so as to restrict the forward/backward movement of the upper rail 15 at the foremost position or the backmost position, thereby entering the slide locked state.

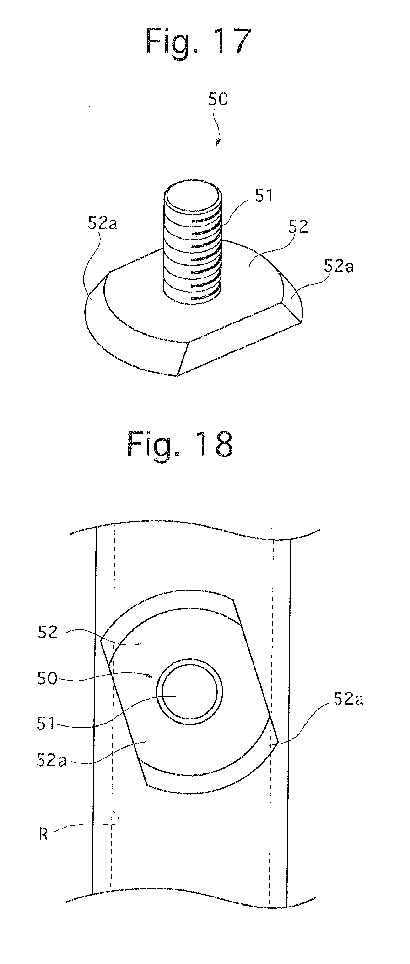

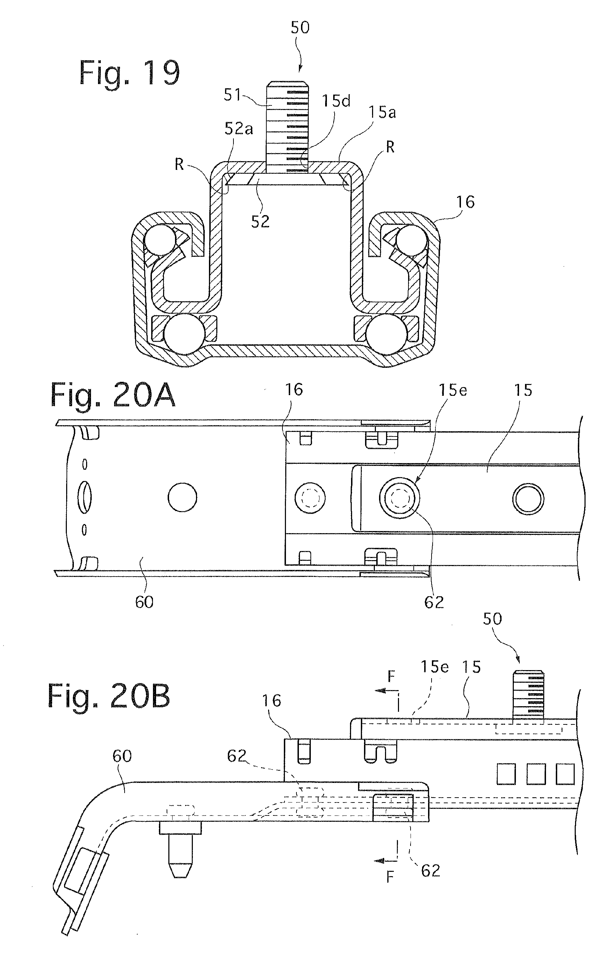

A seat attachment welding bolt 50 is fixed to the upper rail 15 of the seat track. As shown in FIG. 17, the welding bolt 50 has a structure in which a bolt seat 52 is fixed to one end of a bolt 51 of which a male screw is cut. The bolt seat 52 is chamfered on the bolt 51 side to thereby form a slope surface 52a. Since the slope surface 52a is formed in this manner, even when the bolt seat 52 is rotated (FIG. 18) while the bolt 51 is inserted through a welding bolt hole 15d formed in the center protrusion portion 15a from the inner direction, the slope surface 52a does not sit on the bent portion R of the center protrusion portion 15a (FIG. 19), and hence the bolt seat 52 can be welded to the inner wall of the center protrusion portion 15a while the bolt seat 52 comes into close contact with the inner wall.

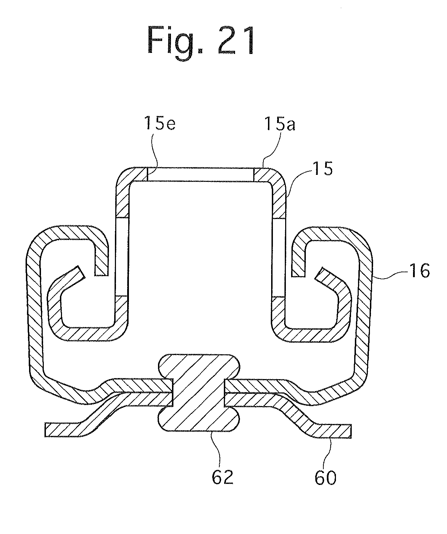

A leg bracket 60, or the like, may be caulked and fixed to the lower rail 16 (FIGS. 20A and 20B). In this case, in order to perform caulking, a working space for the caulking needs to be ensured by sliding the upper rail 15. Depending on the layout or the caulking position, a lower rail and an upper rail having different lengths need to be prepared for each type of a vehicle. Therefore, in the embodiment, a caulking tool hole 15e is formed on the upper surface of the upper rail 15 (the center protrusion portion 15a), and a rivet 62 fixing the leg bracket 60 to the lower rail 16 may be caulked by using the caulking tool hole 15e (FIG. 21).

Likewise, since the caulking tool hole 15e is provided in the upper rail 15, a working space is ensured without sliding the upper rail 15. When the position of the caulking tool hole 15e is adjusted, a degree of freedom in the layout increases, and the same lower and upper rails may be used for plurality of types of vehicles.

### INDUSTRIAL APPLICABILITY

The seat track of the invention may be applied to a front seat of an automobile so as to adjust the position of the seat in the forward/rearward direction in a sliding manner.

## Claims

1. A seat track comprising:
a lower rail;
an upper rail which movably engages with the lower rail;
a slide lock mechanism which prohibits a movement of the upper rail relative to the lower rail and includes a lock lever that is movable between a locked position at which the movement of the upper rail relative to the lower rail is restricted and an unlocked position at which the restriction of the movement of the upper rail relative to the lower rail is released; and
a lock release mechanism which unlocks the lock lever,
wherein the lock release mechanism includes an open rod which transmits a rotational force of an unlock direction to the lock lever and a lock lever bracket which rotatably supports the open rod and the lock lever and is fixed to the upper rail,
wherein the lock lever bracket includes shaft support holes which are distanced from each other in a slide direction of the upper rail and through which the open rod is inserted,
wherein the lock lever includes two bearing portions which are disposed close to both shaft support holes of the lock lever bracket and a rotational transmission groove which extends in the slide direction of the upper rail,
wherein the open rod includes a linear shaft portion, which extends through each shaft support hole and each bearing portion, and a bent portion which engages with the rotation transmission groove of the lock lever and rotates along with the linear shaft portion so as to rotate the lock lever in the unlock direction, and
wherein at least one of the bearing portions of the lock lever is formed as a clip-shaped bearing portion in which a pair of plate-shaped portions is provided so as to be separated from each other in an insertion direction of the open rod, bearings are formed by bending the pair of plate-shaped portions in opposite directions so as to hold the open rod therebetween, and a gap between the bearings in a radial direction is smaller than a diameter of the open rod.

2. The seat track according to 1, wherein the clip-shaped bearing portion is formed in the vicinity of a front upright wall of the lock lever bracket.

3. The seat track according to claim 1, wherein the clip-shaped bearing portion receives the linear shaft portion of the open rod via insertion thereof in a state in which the pair of plate-shaped portions are deformed such that the diameter of the bearing portions is increased, and clasps the linear shaft portion by an elastic restoration force of the plate-shaped portions.

4. The seat track according to claim 1, wherein the lock release mechanism further comprises:
an open lever which extends from a seat front edge portion along the upper rail and comes into contact with a lower portion of a bent portion that is provided on a front end portion of the open rod so as to transmit a rotation operation force in the unlock direction;
an open lever bracket, which is fixed to the upper rail, including front and rear elongated holes that are elongated in a vertical direction, and supporting the open lever so as to be rotatable about a contact portion serving as a pivot point and coming into contact with the rear elongated hole while the open lever is inserted through the elongated holes; and
a handle biasing member which includes a portion extending so as to cross the rear elongated hole and to engage with the upper portion of the open lever and biases the open lever so as to come into contact with the bottom portion of the rear elongated hole, and
wherein the handle biasing member includes a bent portion which restricts an upper space of the rear elongated hole and ensures a lower space for allowing the open lever to be inserted therethrough.

5. The seat track according to claim 1, wherein a pair of said seat tracks is provided on the inner and outer sides of a seat, and wherein the lock release mechanism comprises:
a substantially U-shaped open lever which includes a lever portion along the inner lower and upper rails, a portion along a front edge of the seat, and a lever portion along the outer lower and upper rails and in which the end portion of the inner lever portion is connected to the inner slide lock mechanism, the end portion of the outer lever portion is connected to the outer slide lock mechanism, and the locked state of each slide lock mechanism is released when the portion along the front edge of the seat is lifted up;
a first support portion which is provided in each upper rail, can come into contact with the lower portion of the lever portion and serves as a rotational center when the portion along the front edge of the seat moves downward;
a second support portion which is provided in each upper rail so as to be located rearwardly from the first support portion, can come into contact with the lower portion of the lever portion and serves as a rotational center when the portion along the front edge of the seat is lifted up; and
a biasing unit for biasing the lever portion in a direction so that the lower portion of the lever portion comes into contact with the first support portion and the second support portion.

6. The seat track according to claim 5, wherein said open rod is provided along each upper rail, includes a crank portion which is provided at the front thereof so as to be able to come into contact with the upper portion of the lever portion in the vicinity of the first support portion, and the rear end thereof is connected to the lock lever of the slide lock mechanism, wherein said open rod moves the lock lever between the locked position and the unlocked position by rotating about the axis of a middle portion thereof.

7. The seat track according to claim 5, wherein the biasing unit includes:
a lock biasing spring which biases the lock lever of the slide lock mechanism in the lock direction and biases the lever portion in a direction in which the lower portion of the lever portion comes into contact with the first support portion via the crank portion of the open rod; and
a handle biasing spring of which a middle portion is wound around the open rod, one endportion is lock-engaged with the upper rail, and the other end portion is lock-engaged with an upper groove of the lever portion in the vicinity of the second support portion, said handle biasing spring biasing the lever portion in a direction in which the lower portion of the lever portion comes into contact with the second support portion.

8. The seat track according to claim 6, wherein the first support portion and the second support portion are formed in the open lever bracket, and
wherein the open lever bracket is fixed to the upper rail by burr caulking.

9. The seat track according to claim 1, comprising:
stopper members which are respectively fixed to the lower rail and the upper rail and restrict a movement range of the upper rail,
wherein each stopper member includes a stopper body portion which extends in the movement direction of the upper rail and a protrusion portion which protrudes from one longitudinal edge of the stopper body portion,
wherein each of the lower rail and the upper rail includes an elongated groove that is elongated in the movement direction of the upper rail,
wherein the protrusion portion of each stopper member is fitted and caulked into the elongated groove, and
wherein the stopper members fixed to the lower rail and the upper rail restrict the movement of the upper rail in such a manner that end surfaces of the stopper body portions come into contact with each other at the movement range extremity of the lower rail.

10. The seat track according to claim 9, wherein the stopper members fixed to the lower rail and the upper rail are formed in a shape in which a contour of an end surface of one stopper body portion intersects a contour of an end surface of the other stopper body portion when viewed in the movement direction.

11. The seat track according to claim 10, wherein the stopper member that is fixed to one of the lower rail and the upper rail is formed so that the stopper body portion is formed in a flat plate shape, and the stopper member that is fixed to the other thereof is bent so that the end surface of the stopper body portion is formed in a hook shape.

12. The seat track according to claim 9, wherein a plurality of the protrusion portions is formed in the movement direction of the upper rail so as to be separated from each other.

13. The seat track according to claim 9, wherein one stopper member is fixed to the substantially center position of the lower rail in the forward/rearward direction, and two stopper members are fixed to the upper rail with the stopper member of the lower rail interposed therebetween.
